(19) Europäisches Patentamt
European Patent Office
Office européen des brevets

(11) EP 1 200 204 B1

(12) EUROPEAN PATENT SPECIFICATION

(45) Date of publication and mention of the grant of the patent:
**09.08.2006 Bulletin 2006/32**

(21) Application number: **00940564.8**

(22) Date of filing: **19.06.2000**

(51) Int Cl.:
***B05D 7/24*** *(2006.01)* ***C08G 65/22*** *(2006.01)*

(86) International application number:
**PCT/GB2000/002371**

(87) International publication number:
**WO 2000/078469 (28.12.2000 Gazette 2000/52)**

# (54) Method for functionalizing solid surfaces

Verfahren zur Funktionalisierung fester Oberflächen

Méthode pour fonctionnaliser des surfaces solides

(84) Designated Contracting States:
**AT BE CH CY DE DK ES FI FR GB GR IE IT LI LU MC NL PT SE**

(30) Priority: **18.06.1999 GB 9914185**
**25.01.2000 GB 0001514**

(43) Date of publication of application:
**02.05.2002 Bulletin 2002/18**

(73) Proprietor: **THE SECRETARY OF STATE FOR DEFENCE**
**Salisbury SP4 0JQ (GB)**

(72) Inventors:
- **WILLIS, Colin, Robert**
  **Wiltshire SP4 0JQ (GB)**
- **BADYAL, Jas, Pal, Singh**
  **University of Durham**
  **Durham DH1 3LE (GB)**
- **BREWER, Stuart, Anson**
  **Wiltshire SP4 0JQ (GB)**

(74) Representative: **Farnsworth, Alastair Graham et al**
**Directorate of Intellectual Property Rights**
**Formalities Section**
**Poplar 2**
**MOD Abbey Wood 2218**
**Bristol BS34 8JH (GB)**

(56) References cited:
**FR-A- 2 581 991**
**GB-A- 1 037 144**
**US-A- 5 876 753**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to the production of coatings which contain epoxy functional groups, using pulsed plasma polymerisation of compounds such as glycidyl methacrylate. Such surfaces can be subject to subsequent derivatisation with other functional groups, such as nucleophilic reagents, or they may be used to promote adhesion and as adhesives.

The surface functionalisation of solid objects is a topic of considerable technological importance, since it offers a cost-effective means for improving substrate performance without affecting the overall bulk properties. For instance, epoxy groups at a surface can provide binding sites for the immobilisation of nucleophilic reagents (Rosowsky, A. In *Heterocyclic Compounds with* Three- *and Four- Membered Rings,* Weissberger, A. Ed.; The Chemistry of Heterocyclic Compounds; Interscience Publishers: New York, 1964; Part 1), such as amines (Zhang, J. et al., *J. Polym. Sci., Part A: Polym. Chem.,* **1995,** 33, 2629; Mori, M. et al., *J. Polym. Sci., Part A:* Polym. Chem., **1994,** 32, 1683; Allmer, K. et al., *J. Polym. Sci., Part* A: Polym. Chem., **1989,** 27, 1641; Allcock, H. R. et al., *Chem. Mater.,* **1994,** 6, 516; Lee, W. et al., J. *Colloid Interface Sci.*, **1998,** 200, 66; Kubota, H. et al., *J. Appl. Polym. Sci.*, **1995,** 56, 25). These reactions find application in biotechnology (Lee, W.; Furusaki, et al., *J. Colloid Interface Sci.,* **1998,** 200, 66; Kubota, H. et al., J. *Appl. Polym. Sci.,* **1995,** 56, 25; Bai, G. et al., *Polym. Bull.,* **1996,** 36, 503; Motomura, T. et al., Eur. Pat. Appl. 679436, 1999) and adhesion (Zhang, J. et al., *J. Polym. Sci., Part A: Polym. Chem.,* **1995,** 33, 2629; Shang, M. C. et al., *Polymer,* **1999,** 40, 299; Wu, S. et al., *Macromolecules,* **1999,** 32, 186; Yamada, K. et al., *J. Appl. Polym. Sci.,* **1996,** 60, 1847; Wang, T. et al., *J. Adhes. Sci. Tech.,* **1997,** 11, 679). Existing methods of attaching epoxides onto solid surfaces include UV (Allmer, K. et al., *Polym. Sci., Part A:* Polym. Chem., **1989,** 27, 1641; Allcock, H. R. et al., *Chem.* Mater., **1994,** 6, 516; Bai, G. et al., *Polym. Bull.,* **1996,** 36, 503; Wu, S. et al., *Macromolecules,* **1999,** 32, 186) or electron beam (Lee, W. et al., *J. Colloid Interface Sci.,* **1998,** 200, 66) irradiation of substrates immersed in a solution containing an initiator and a polymerisable epoxy monomer (e.g. glycidyl methacrylate) leading to polymer growth at the surface. Other possibilites encompass plasma activation of a substrate followed by solution phase grafting of a polymerisable epoxy monomer (Mori, M. et al., *J. Polym. Sci., Part* A: Polym. Chem., **1994,** 32, 1683; Yamada, K. et al., *J. Appl. Polym. Sci.,* **1996,** 60, 1847), or coupling epoxysilanes onto silicon wafers (Luzinov, I. et al., *Langmuir,* **1999,** 15, 3029). All of these approaches suffer from drawbacks such as involving multistep processes and the requirement for solution phase chemistry. Some may also show a tendency to be substrate-specific.

Plasma polymers are often regarded as being structurally dissimilar compared to conventional polymers, since they possess high levels of cross-linking and lack a regular repeat unit (Yasuda, H. Plasma *Polymerisation* Academic Press: New York, 1985). This can be attributed to the plasma environment generating a whole range of reactive intermediates which contribute to the overall lack of chemical selectivity. However, it has been found that pulsing the electric discharge on the ms-μs timescale can significantly improve structural retention of the parent monomer species (Panchalingam, V. et al., *Appl. Polym. Sci.* **1994,** 54, 123; Han, L. M. et al., *Chem. Mater.,* **1998,** 10, 1422; Timmons et al., US patent no. US 5,876,753) and in some cases conventional linear polymers have been synthesised (Han, L. M. et al.,J. *Polym. Sci., Part A: Polym. Chem*. **1998,** 36, 3121). Under such conditions, repetitive short bursts of plasma are understood to control the number and lifetime of active species created during the on- period, which then is followed by conventional reaction pathways occurring during the off-period (e.g. polymerisation) (Savage, C.R. et al., Chem. Mater., 1991, 3, 575).

The applicants have found that plasma polymerisation of monomers containing epoxy functionalities can potentially overcome the limitations of existing techniques for forming epoxy functionalised surfaces.

According to the present invention there is provided a method for applying a reactive expoxy group containing coating to a substrate, characterised that it comprises subjecting said substrate to a pulsed plasma discharge in the presence of a compound of formula (I) or (IA)

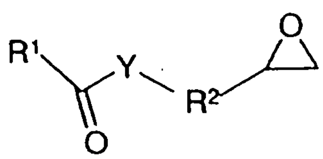

(I)

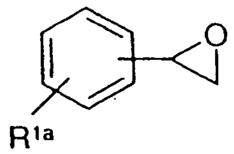

(IA)

where $R^1$ or $R^{1a}$ is an optionally substituted hydrocarbyl group or heterocyclic group; $R^2$ is an optionally substituted straight or branched alkylene chain; and Y is oxygen or a bond and wherein the average power of the pulsed plasma discharge is less than 0.05 W/cm$^3$.

As used herein, the term "hydrocarbyl" includes alkyl, alkenyl, alkynyl, aryl and aralkyl groups. The term "aryl" refers to aromatic cyclic groups such as phenyl or naphthyl, in particular phenyl. The term "alkyl" refers to straight or branched chains of carbon atoms, suitably of from 1 to 20 carbon atoms in length. The terms "alkenyl" and "alkynyl" refer to straight or branched unsaturated chains suitably having from 2 to 20 carbon atoms. These groups may have one or more multiple bonds. Thus examples of alkenyl groups include allenyl and dienyl.

Suitable optional substituents for hydrocarbyl groups $R^1$ and $R^{1a}$ and alkylene groups $R^2$ are groups that are substantially inert during the process of the invention. They may include halo groups such as fluoro, chloro, bromo and iodo. Particularly preferred halo substituents are fluoro.

Preferably Y is oxygen.

In particular, $R^2$ is an unsubstituted alkylene group. Thus, in a particular embodiment, the compound of formula (I) is a compound of formula (II)

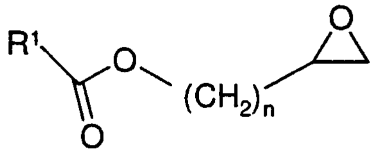

(II)

where $R^1$ is as defined above and n is an integer of from 1 to 20, for example from 1 to 3 and preferably 1.

Suitably $R^1$ and $R^{1a}$ are unsaturated hydrocarbyl groups such as alkenyl or alkynyl. In particular, $R^1$ or $R^{1a}$ is a $C_{1-6}$ straight or branched alkenyl group. These may be optionally substituted as defined above.

A particularly preferred compound of formula (II) are acrylates of formula (III)

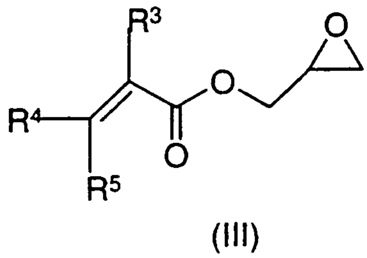

(III)

where $R^3$, $R^4$and $R^5$ are independently selected from hydrogen or alkyl, and in particular, from hydrogen or $C_{1-6}$ alkyl, such as methyl.

A particular example of a compound of formula (III) is glycidyl methacrylate where $R^3$ is methyl, and $R^4$ and $R^5$ are both hydrogen.

A particular example of a compound of formula (IA) is a divinylbenzene monoxide of formula (IV)

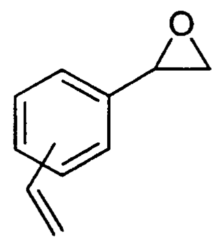

(IV)

Precise conditions under which the plasma deposition of the compound of formula (I) or (IA) takes place in an effective manner will vary depending upon factors such as the nature of the monomer, the substrate etc. and will be determined using routine methods and/or the techniques illustrated hereinafter. In general however, polymerisation is suitably effected using vapours of compounds of formula (I) or (IA) at pressures of from 0.01 to 10 mbar, suitably at about 0.2mbar.

A glow discharge is then ignited by applying a high frequency voltage, for example at 13.56MHz.

The applied fields are suitably of average power of up to 50W.

The fields are suitably applied for a period sufficient to give the desired coating. In general, this will be from 30 seconds to 20 minutes, preferably from 2 to 15 minutes, depending upon the nature of compound of formula (I) or (IA) and the substrate etc.

The average power of the pulsed plasma discharge is less than 0.05 W/$cm^3$, preferably less than 0.025 W/$cm^3$ and most preferably less than 0.0025 W/$cm^3$.

The pulsing regime which will deliver such low average power discharges will vary depending upon the nature of the substrate, the size and nature of the discharge chamber etc. However, suitable pulsing arrangements can be determined by routine methods in any particular case. A typical sequence is one in which the power is on for 20 $\mu$s and off for from 1000 $\mu$s to 20000 $\mu$s.

Suitable plasmas for use in the method of the invention include non-equilibrium plasmas such as those generated by radiofrequencies (Rf), microwaves or direct current (DC). They may operate at atmospheric or sub-atmospheric pressures as are known in the art.

The plasma may comprise the monomeric compound alone, in the 1 absence of other gases or in mixture with for example an inert 1 gas. Plasmas consisting of monomeric compound alone may be achieved as illustrated hereinafter, by first evacuating the reactor vessel as far as possible, and then purging the reactor vessel with the organic compound for a period sufficient to ensure that the vessel is substantially free of other gases. The temperature in the plasma chamber is suitably high enough to allow sufficient monomer in gaseous phase to enter the plasma chamber. This will depend upon the monomer and conveniently ambient temperature will be employed. However, elevated temperatures for example from 25 to 50°C may be required in some cases.

The invention further provides a substrate having an epoxy containing coating thereon, obtained by a process as described above. Such substrates will include any solid substrate, such as fabric, metal, glass, ceramics, paper, wood or polymers such as polytetrafluoroethylene, polythene or polystyrene. In a particular embodiment, the surface comprises a support material such as a polymeric material used in biochemical analysis.

When the invention is used in the field of adhesives, the substrate may be any of the above-listed substrates, but is likely to be glass, ceramic, metal, paper, wood or polymer.

The pulsed plasma polymerisation of the invention is therefore a solventless method for functionalising solid surface with epoxy groups.

Once the epoxy functional coating has been applied to the substrate, the epoxy group may be further derivatised as required. In particular, it may be reacted with a carboxylic acid such as trifluoroacetic acid, an amine such as diethylamine or an amino acid. The derivatisation reaction may be effected in the gaseous phase where the reagents allow, or in a solvent such as an organic solvent. Examples of such solvents include alcohols such as methanol, and tetrahydrofuran.

The derivatisation may result in the immobilisation of a nucleophilic reagent on said surface.

Epoxide functionalised surfaces produced in accordance with the invention were derivatized with a variety of nucleophilic reagents (e.g. carboxylic acids and amines). Typically, reaction occured at the electrophilic epoxide carbon centres leading to ring opening. In the case of carboxylic acids and amines, attack on the less substituted epoxide carbon is favoured giving rise to the secondary alcohol. Scheme I.

Thus in a further embodiment, the invention provides a method for immobilisation of a nucleophilic reagent at

a surface, said method comprising the application of a reactive epoxy containing coating to said surface by method described above, and then contacting the surface with a solution of said nucleophilic agent under conditions such that the nucleophilic agent reacts with the epoxy groups.

Curing of the epoxy groups in the coating may result in the adhesion of the surface to another surface. Thus in yet a further aspect, the invention provides a method for adhering two surfaces together, said method comprising applying a reactive coating to at least one of said surfaces by plasma deposition using the method a described above, and contacting said surface with the other surface under conditions whereby reactive groups in the coating will react so as to secure the two surfaces together.

Suitably the other surface itself contains reactive functionalities, in particular nucleophilic groups such as amine or acid groups which will react with the reactive groups in the coating so as to join the surfaces together. The reactive groups are preferably epoxide groups. Where such nucleophilic groups are not used, coupling agents may be employed.

In a particular embodiment, a reactive epoxy containing coating is applied to both said surfaces using the method described above, a coupling agent such as a diamine, for example, ethylene diamine, is introduced therebetween. The coupling agent is then allowed to react with epoxy groups on each surface, resulting in adhesion between the surfaces.

If necessary or desired, adhesion may be enhanced by first roughening the surface. This may be achieved by $O_2$ plasma roughening (M. Morra et al., Surf. Interf. Anal. 1990, 16, 412; Ryan et al., Macromolecules 1995, 28, 1377).

Pulsed plasma polymerization in accordance with the invention has been found to be an effective means for functionalizing solid substrates with epoxide groups. The resulting functionalised surfaces are amenable to conventional epoxide derivatization chemistries. In addition they have been found to offer excellent adhesion performance.

The invention will now be particularly described by way of example with reference to the accompanying diagrammatic drawings and reaction schemes in which:

**Figure 1** shows the C(1s) XPS spectra of glycidyl methacrylate plasma polymers deposited onto a flat glass substrate: (a) theoretical curve; (b) 3 W continuous wave; and (c) pulsed (time on = 20 μs, time off = 20 ms, peak power = 40 W).

**Figure 2** shows the infrared spectra of: (a) glycidyl methacrylate monomer; (b) 3 W continuous wave plasma polymer; and (c) pulsed plasma polymer (time on = 20 μs, time off = 20 ms, peak power = 40 W).

**Figure 3** shows the C(1s) XPS spectra of plasma polymers exposed to trifluoroacetic acid vapour: (a) 3 W continuous wave; and (b) pulsed (time on = 20 μs, time off = 20 ms, peak power = 40 W).

**Figure 4** shows the N(1s) and C(1s) XPS spectra of glycidyl methacrylate pulsed plasma polymer derivatised with diethyleeamine (time on = 20 μs, time off = 20 ms, peak power = 40 W).

**Figure 5** shows stress/strain curves of: (a) polyethylene substrate, and (b) single lap joint of pulsed glycidyl methacrylate plasma polymer coated polyethylene strips (time on = 20 μs, time off = 20 ms, peak power = 40 W).

**Figure 6** shows the influence of 20 W oxygen plasma pretreatment time upon lap joint strength for PTFE substrate which were subsequently coated with pulsed glycidyl methacrylate plasma polymer (time on = 20 μs, time off = 20 ms, peak power = 40 W).

**Figure 7** shows the C(1s) XPS spectra of 3W continuous wave allyl glycidyl ether plasma polymer.

**Figure 8** shows the infrared spectra of: (a) allyl glycidyl ether monomer; (b) 3 W continuous wave plasma polymer; and (c) pulsed plasma polymer (time on = 20 μs, time off = 20 ms, peak power = 40 W) .

**Figure 9** shows the infrared spectra of: (a) butadiene monoxide monomer; (b) 3 W continuous wave plasma polymer; and (c) pulsed plasma polymer (time on = 20 μs, time off = 20 ms, peak power = 40 W).

**Scheme 1** illustrates the reaction between an epoxide ring and a nucleophilic reagent, where R is an organic residue and $R^1$ is a nucleophilic group.

**Scheme 2** illustrates the reaction of poly(glycidyl methacrylate) with trifluoroacetic acid.

**Scheme 3** illustrates the reaction of poly(glycidyl methacrylate) with diethylamine.

Example 1

Plasma polymerization of glycidyl methacrylate (Aldrich, +97%, further purified using several freeze-pump-thaw cycles) was carried out in a cylindrical glass reactor pumped by a mechanical rotary pump via a liquid nitrogen cold trap (base pressure = 8 x $10^{-3}$ torr, and leak rate = 3.2 x $10^{-9}$ mol $s^{-1}$). A copper coil wrapped around the reactor was coupled to a 13.56 MHz radio frequency power supply via an LC matching network. Prior to each experiment, the chamber was cleaned using a 50 W air plasma at 0.2 torr. Glycidyl methacrylate monomer was then introduced via a fine control needle valve at a pressure of 0.2 torr and 1.2 x $10^{-7}$ mol $s^{-1}$ flow rate, followed by film deposition for 15 mins. The reactor was purged with monomer vapour for 5 minutes following plasma deposition. In the case of pulsed plasma polymerization, a signal generator was used to trigger the RF supply, and the pulse shape was monitored with an oscilloscope. Quartz crystal deposition rate measurements were carried out during plasma polymerization using a Varian 985-7013 thickness monitor.

XPS analysis of the glycidyl methacrylate plasma polymer coatings obtained confirmed the presence of only carbon and oxygen at the surface, with no Si(2p) signal from the underlying glass substrate showing through. The C(1s) envelope contained a variety of carbon functionalities for both the continuous wave and pulsed plasma polymer layers: CH (285.0 eV), $\underline{C}(CH_3)$(C=O) O (285.7 eV), O-$\underline{C}H_2$-CO (286.7 eV), epoxide carbons (287.2 eV), $\underline{C}$=O (287.8 eV), and $\underline{C}$(=O)O (289.1 eV), Figure 1. Apart from the carbonyl group at 287.8 eV (associated with the continuous wave plasma polymer), the remaining peak assignments are referenced to XPS spectra obtained from conventional solution phase polymerised glycidyl methacrylate. Pulsed plasma polymerization produced a much larger concentration of epoxide groups compared to continuous wave conditions, Figure 1 and Table 1.

Table 1: XPS analysis of glycidyl methacrylate plasma polymers.

| **Conditions** | **C(1s)** | | **Atomic %** | |
|---|---|---|---|---|
| | **% Epoxy** | **% (C=0)0** | **% C** | **% O** |
| Continuous wave | 7.1±0.5 | 6.5±0.5 | 77.5±0.5 | 22.5±0.5 |
| Pulsed | 19.1±0.5 | 10.6±0.3 | 73±1 | 27±1 |
| Theoretical | 20.0 | 10.0 | 70.0 | 30.0 |

Infrared spectra of plasma polymer films deposited onto NaCl plates were acquired on a Mattson Polaris FTIR instrument at a resolution of 4 $cm^{-1}$ and averaged over 100 scans.

Infrared spectroscopy was used to probe the molecular structure of the plasma deposited coatings, Figure 2. For the glycidyl methacrylate monomer, the following band assignments were made: epoxide ring C-H stretching (3063 $cm^{-1}$), C-H stretching (3000-2900 $cm^{-1}$), acrylate carbonyl stretching (1720 $cm^{-1}$) , acrylate C=C stretching (1637 $cm^{-1}$) , epoxide ring breathing (1253 $cm^{-1}$) , antisymmetric epoxide ring deformation (908 $cm^{-1}$) , and symmetric epoxide ring deformation (842 $cm^{-1}$). The weak absorption feature present at 2360 $cm^{-1}$ originates from background $CO_2$ present in the FTIR spectrometer. Continuous wave plasma deposition of glycidyl methacrylate gave rise to broad infrared absorption features: epoxide ring C-H stretching (3060 $cm^{-1}$), C-H stretching (3000-2900 $cm^{-1}$), saturated ester C=O stretching (1728 $cm^{-1}$), C=C stretching (1630 $cm^{-1}$) , epoxide ring breathing (1253 $cm^{-1}$) , antisymmetric epoxide ring deformation (908 $cm^{-1}$), and symmetric epoxide ring deformation (842 $cm^{-1}$). The epoxide ring and carbon-carbon double bond features were much weaker compared to the monomer, whereas the C-H stretching region was more intense. All the bands associated with the glycidyl methacrylate monomer were clearly discernible following pulsed plasma polymerization, except for the acrylate carbon-carbon double bond feature which had disappeared during polymerization. The more intense infrared absorption bands belonging to the epoxide ring confirmed that greater structural retention had occurred during electrical pulsing conditions.

Quartz crystal deposition rate measurements provided values of 19 ± 3 x $10^{-9}$ g $s^{-1}$ $cm^{-2}$ and 2.5 ± 0.5 x $10^{-9}$ g $s^{-1}$ $cm^{-2}$ for the continuous wave and the pulsed conditions respectively. The lower value obtained for pulsed plasma polymerization can be mainly attributed to less energy input. In fact the deposition efficiency (expressed as deposition rate divided by power) was calculated to be 6.3 and 63 x $10^{-9}$ g $cm^{-2}$ $J^{-1}$ respectively.

Example 2

The epoxide functionalized surfaces were then reacted with trifluoroacetic acid vapour (Fluorochem Limited, +99.5%) for 30 min followed by evacuation in order to remove any absorbed remnants. Other derivatization reactions included exposure to ethylenediamine (Aldrich, +99%), and diethylamine (Sigma, +98%); here plasma polymer coated glass slides were immersed into a solution of the amine diluted with methanol (Fisher, +99.8%) for 24 hrs, and then

rinsed in pure methanol.

X-ray photoelectron spectroscopy (XPS) analysis was performed using a Kratos ES300 spectrometer equipped with a Mg Kα X-ray source and an hemispherical analyser operating in fixed retard ratio mode (22:1). Photoelectrons were collected at a take off angle of 30° from the substrate normal. The elemental composition was calculated using sensitivity factors derived from chemical standards, C : O : F : N equals 1.00 : 0.57 : 0.67 : 0.74. All binding energies were referenced to the C(1s) hydrocarbon peak at 285.0 eV. A Marquardt minimization computer program was used to fit core level envelopes with fixed width Gaussian peaks.

Trifluoroacetic acid vapour underwent reaction to a greater extent with the pulsed plasma polymer coating (XPS measured 4.1± 0.5% and 16.0 ± 0.8% fluorine for the continuous and pulsed plasma polymer coatings respectively), Scheme 2. This enhancement for the pulsed plasma polymer coating was confirmed by the identification of $\underline{CF_3}$ functionalities at 293.4 eV in the C(1s) envelope, Figure 3. The proportion of epoxide groups which had undergone monoesterification was calculated using the F(ls) peak area as follows:

$$\%[F] = \frac{\frac{3}{2}x[Epoxide]_0}{[C]_0 + [O]_0 + \frac{7}{2}x[Epoxide]_0} \text{ x } 100 \qquad (1)$$

where x is the fraction of reacted epoxides, $[Epoxide]_0$ is the initial concentration of epoxide groups, $[C]_0$ is the initial concentration of carbon, $[O]_0$ is the initial concentration of oxygen, and $[F]$ is the percentage of fluorine detected at the surface. On this basis, 42% and 89% of the surface epoxide groups had reacted for the continuous wave and pulsed plasma polymer layers respectively. Therefore it appears that the proportion of epoxide group centres calculated from the C(1s) peak fitting (Figure 1) is probably an overestimation for continuous wave conditions. Other groups such as ethers or carbonyls must also be present in the plasma polymer layer contributing to the component at around 287.2 eV in the C(1s) spectrum. Excess trifluoroacetic acid could potentially react further with alcohol groups formed during epoxide ring opening to produce a diester and this may contribute to a slight overestimation in the overall reaction yield.

Diethylamine was used to assess the reactivity of surface epoxide groups towards amines. This secondary amine was chosen because it is capable of reacting only once with an epoxide centre, Scheme 2; therefore making it much easier to calculate the number of aminated epoxides from the corresponding N(1s) peak area:

$$\%[N] = \frac{\frac{1}{2}x[Epoxide]_0}{[C]_0 + [O]_0 + \frac{5}{2}x[Epoxide]_0} \text{ x } 100 \qquad (2)$$

4.4% nitrogen was detected by XPS for the pulsed plasma polymer layer, which corresponds to 59% of the surface epoxide groups having undergone reaction as depicted in Scheme 2. The two peaks seen in the N(1s) spectra can be assigned to neutral (399.8 eV) and positively charged nitrogen (402.1 eV), Figure 4, where the latter is probably due to protonation by atmospheric moisture, rather than the reaction of the amine centre with an adjacent epoxide group.

Example 3

For the adhesion measurements, a drop (~ 3 μl) of a coupling agent solution (ethylenediamine 0.5 M in 1,4-dioxane (Aldrich, +99%)) was placed between two glycidyl methacrylate plasma polymer coated strips of polymer film (polyethylene, PE, ICI, 0.08 mm thickness, or polytetrafluoroethylene, PTFE, Goodfellow, 0.25 mm thickness) and then cured overnight at 60°C. Subsequently, single lap adhesion tests were carried out using an Instron 5543 tensilometer operating at a crosshead speed of 1 mm $min^{-1}$.

The results of the single lap adhesion test measurements showed that the adhesive bond was stronger than the threshold for failure of the host polyethylene matrix (bulk failure occurred at 17 N), Figure 5. No adhesion between

polyethylene strips was observed in the absence of either the epoxide functionalities or the curing agent.

In the case of PTFE, $O_2$ plasma roughening of the substrate was needed prior to pulsed plasma deposition of glycidyl methacrylate in order to achieve good adhesion. Here the joint eventually failed rather than the substrate, since PTFE was much stronger than PE (bulk failure of PTFE occurred at 45 N). The duration of oxygen plasma pretreatment was found to affect the strength of the adhesive joint, Figure 6. Excessively long oxygen plasma exposures could be leading to polymer chain scission and the formation of low molecular weight material, which will have a detrimental effect upon adhesion.

Comparative Example 4

The methodology of example 1 was used in attempts to deposit films of allyl glycidyl ether (structure V).

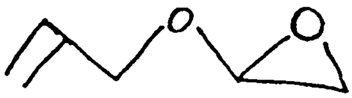 (V)

This material was cited in US 5,876,753 as being suitable for use in plasma deposition to generate polymeric films. Films were produced using 3W continuous wave and pulsed plasma techniques. The films were subsequently analysed using XPS and IR spectroscopy.

Results of XPS analysis are summarised in Table 2. This shows that none of the deposited films show molecular structures that one would expect from the polymerised monomer when it undergoes conventional polymerisation via the C=C bond. The theoretical values were calculated from the conventional molecular structure of the polymerised allyl glycidyl ether.

Table 2 - elemental analysis of allyl glycidyl ether coatings as determined by XPS

| Film | %C | %O | %Si |
|---|---|---|---|
| Theoretical | 75 | 25 | 0 |
| A - Continuous wave (3W, 30mins.) | 86 | 14 | 0 |
| B - Pulsed 30min | 49 | 35 | 16 |
| C - Pulsed 90min | 61 | 30 | 9 |
| Glass slide | 23 | 53 | 24 |

Typical errors of ±2% on measured values.

Note that the key parameters for the pulsed deposition are time on=20μs, time off=20ms, peak power=40W.

The characterisation of each film will now be discussed in more detail.

Film A - deposited by 3W continuous wave method

The film deposited by the continuous wave method showed a depletion in oxygen content with respect to the theoretical value. No Si(2p) peak was observed from the glass substrate, indicating that a film of reasonable thickness was produced. The C(1s) XPS spectrum of the film is shown in Figure 7. The spectra are characterised by a strong hydrocarbon peak (285.0eV), but other functionalities are discernible such as C-O (286.5eV)and C=O (288.2eV). The latter functionality is not present in the monomer and could be due to rearrangement of the molecule in the plasma environment. The IR spectrum (Figure 8) indicates the presence of C=O groups (1728$cm^{-1}$), whilst a small amount of epoxy functionality is retained, indicated by the small peaks at 1259$cm^{-1}$ and 848$cm^{-1}$. The C=O peak overlaps with the C=C peak which has not disappeared.

These data indicate that continuous wave deposition causes films to be deposited in which most of the epoxy functionality has been removed. This is not desired to achieve the aims of the invention in suit.

Films B and C - deposited by pulsed method

The pulsed plasma technique produced very slow deposition rates, evidenced by the presence of Si peaks in the XPS spectra of both films B and C. The C(1s) envelope showed functionalised carbon with the presence of both C-O and C=O moieties. This indicates that some of the epoxy functionality has been lost. The IR spectra of films B and C were very poor (an example of which can be seen in Figure 8).

This work indicates that the method of the present invention shows unexpected advantages over the work of Timmons. The continuous wave and pulsed methods using the allyl gycidyl ether produce films in which a substantial amount of epoxy functionality has been lost. Furthermore, the deposition process using the pulsed technique is unacceptably slow. The method of the present invention suffers from neither of the problems suffered by an analogous method using allyl glycidyl ethers.

<u>Comparative Example 5</u>

The methodology of example 1 was used to try to deposit films of butadiene monoxide (structure VI).

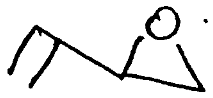

(VI)

Results of XPS analysis are summarised in Table 3. This shows that none of the deposited films show molecular structures that one would expect from the polymerised monomer when the monomer undergoes conventional polymerisation. The theoretical values were calculated from the conventional molecular structure of the polymerised butadiene monoxide.

Table 3 - elemental analysis of butadiene monoxide coatings as determined by XPS

| Film | %C | %O | %Si |
|---|---|---|---|
| Theoretical | 80 | 20 | 0 |
| D - Continuous wave (3w, 30mins.) | 89 | 11 | 0 |
| E - Pulsed 30min | 54 | 35 | 11 |
| Glass slide | 23 | 53 | 24 |

Typical errors of ±2% on measured values.

Note that the key parameters for the pulsed deposition are time on=20μs, time off=20ms, peak power=40W.

The characterisation of each film will now be discussed in more detail.

<u>Film D - deposited by 3W continuous wave method</u>

The film deposited by the continuous wave method showed a depletion in oxygen content with respect to the theoretical value. No Si(2p) peak was observed from the glass substrate, indicating that a film of reasonable thickness was produced. The IR spectrum (Figure 9) indicates the presence of C=O groups (ça 1730$cm^{-1}$). It is difficult to determine whether a small amount of epoxy functionality is retained; this would be indicated by the presence of peaks at ça 1259$cm^{-1}$ and 848$cm^{-1}$.

These data indicate that continuous wave deposition causes films to be deposited in which most, if not all, of the epoxy functionality has been removed. This is not desirable, given the aims of the invention in suit.

<u>Films E - deposited by pulsed method</u>

The pulsed plasma technique produced very slow deposition rates, evidenced by the presence of Si peaks in the XPS spectra of film E. The IR spectrum of film E was very weak (see Figure 9). This is consistent with the existence of a very thin coating.

This work indicates that the method of the present invention shows unexpected advantages over the work of Timmons. The continuous wave method using the butadiene monoxide produces films in which a substantial amount of epoxy functionality has been lost. Furthermore, the deposition process using the pulsed technique is unacceptably slow. The method of the present invention suffers from neither of the problems suffered by an analogous method using butadiene monoxide.

## Claims

1. A method for applying a reactive epoxy group containing coating to a substrate, **characterised in that** it comprises subjecting said substrate to a pulsed plasma discharge in the presence of an organic compound of formula (I) or (IA)

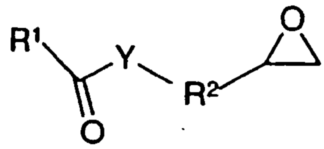

(I)

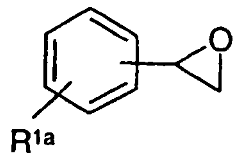

(IA)

where $R^1$ or $R^{1a}$ is an optionally substituted hydrocarbyl group or heterocyclic group; $R^2$ is an optionally substituted straight or branched alkylene chain; and Y is oxygen or a bond and wherein the average power of the pulsed plasma discharge is less than 0.05 $W/cm^3$.

2. A method according to Claim 1, in which the compound of formula (I) is a compound of formula (II)

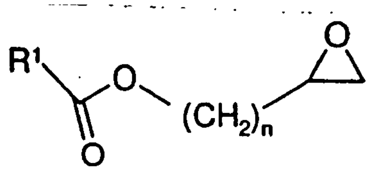

(II)

where $R^1$ is as defined in Claim 1 and n is an integer of from 1 to 20.

3. A method according to Claim 2, in which, in the compound of formula (II), n is from 1 to 3.

4. A method according to Claim 3, in which the compound of formula (II) is a compound of formula (III)

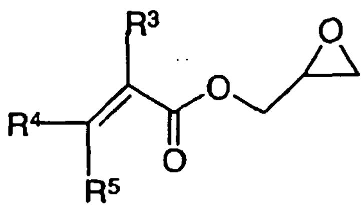

(III)

where $R^3$, $R^4$ and $R^5$ are independently selected from hydrogen or $C_{1-6}$alkyl.

5. A method according to any of Claims 1 to 4, further comprising the step of derivatisating the epoxy groups, suitably with a nucleophilic group.

6. A method according to Claim 5, in which said derivatising step comprises reaction with a carboxylic acid or an amine.

7. A method according to Claim 6, in which a solution of said carboxylic acid or amine is contacted with the coated surface of the substrate under conditions in which the acid or amine functionality reacts with the epoxy groups.

8. A method for adhering two surfaces together **characterised in that** it comprises applying a reactive epoxy-containing coating to at least one of said surfaces by the method of any of Claims 1 to 4 and contacting said at least one surface with the other surface under conditions in which the reactive epoxy groups in the coating react so as to secure the surfaces together.

9. A method according to Claim 8, comprising applying the reactive coating to both surfaces, introducing a coupling agent between said surfaces and allowing said coupling agent to react with the reactive groups on each surface.

10. A method according to Claim 9, in which the coupling agent is a diamine.

11. A method according to Claim 8, in which said other surface includes nucleophilic groups able to react with said reactive epoxy groups so as to bring about adhesion.

12. A method according to Claim 11, in which said nucleophilic groups are selected from amino or carboxylic acid groups.

## Patentansprüche

1. Verfahren zum Aufbringen einer reaktive Epoxygruppen enthaltenden Beschichtung auf ein Substrat, **dadurch gekennzeichnet, dass** dieses umfasst, das Substrat einer gepulsten Plasmaentladung in Gegenwart einer organischen Verbindung der Formel (I) oder (IA) zu unterziehen

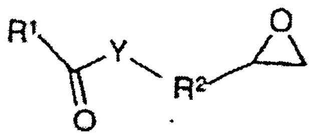

(I)

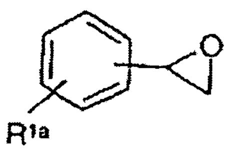

(IA)

wobei $R^1$ oder $R^{1a}$ eine optional substituierte Hydrocarbylgruppe oder heterozyklische Gruppe ist; $R^2$ eine optional substituierte geradkettige oder verzweigte Alkylenkette ist, und Y Sauerstoff oder eine Bindung ist, und wobei die durchschnittliche Energie der gepulsten Plasmaentladung weniger als 0,05 W/cm$^3$ beträgt.

2. Verfahren nach Anspruch 1, wobei die Verbindung der Formel (I) eine Verbindung der Formel (II) ist

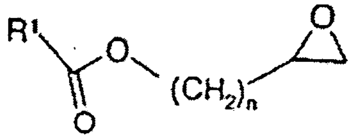

(II)

wobei $R^1$ so ist, wie in Anspruch 1 definiert und n eine ganze Zahl von 1 bis 20 ist.

**3.** Verfahren nach Anspruch 2, wobei n in der Verbindung der Formel (II) 1 bis 3 ist.

**4.** Verfahren nach Anspruch 3, wobei die Verbindung der Formel (II) eine Verbindung der Formel (III) ist

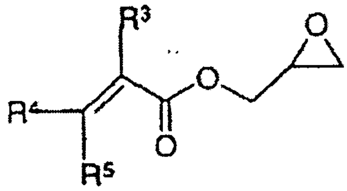

(III)

wobei $R^3$, $R^4$ und $R^5$ unabhängig ausgewählt sind unter Wasserstoff oder $C_{1-6}$-Alkyl.

**5.** Verfahren nach einem der Ansprüche 1 bis 4, weiterhin umfassend den Schritt der Derivatisierung der Epoxygruppen, geeigneter Weise mit einer nukleophilen Gruppe.

**6.** Verfahren nach Anspruch 5, wobei der Derivatisierungsschritt die Reaktion mit einer Carbonsäure oder einem Amin umfasst.

**7.** Verfahren nach Anspruch 6, wobei eine Lösung der Carbonsäure oder des Amins mit der beschichteten Substratoberfläche unter Bedingungen in Kontakt gebracht wird, unter denen die Säure- oder Aminfunktionalität mit den Epoxygruppen reagiert.

**8.** Verfahren zum Aneinanderheften zweier Oberflächen, **dadurch gekennzeichnet, dass** dieses umfasst, eine reaktives Epoxy enthaltende Beschichtung auf wenigstens eine der Oberflächen durch das Verfahren nach einem der Ansprüche 1 bis 4 aufzubringen und diese wenigstens eine Oberfläche mit der anderen Oberfläche unter Bedingungen in Kontakt zu bringen, unter denen die reaktiven Epoxygruppen in der Beschichtung reagieren, um so die Oberflächen zusammenzuhalten.

**9.** Verfahren nach Anspruch 8, umfassend das Aufbringen der reaktiven Beschichtung auf beide Oberflächen, das Einführen eines Kopplungsmittels zwischen den Oberflächen und das Reagierenlassen des Kopplungsmittels mit den reaktiven Gruppen an jeder Oberfläche.

**10.** Verfahren nach Anspruch 9, wobei das Kopplungsmittel ein Diamin ist.

**11.** Verfahren nach Anspruch 8, wobei die andere Oberfläche nukleophile Gruppen enthält, die in der Lage sind, mit den reaktiven Epoxygruppen zu reagieren, um so Anhaftung zu bewirken.

**12.** Verfahren nach Anspruch 11, wobei die nukleophilen Gruppen ausgewählt sind unter Aminogruppen oder Carbonsäuregruppen.

## Revendications

1. Procédé d'application d'un revêtement réactif contenant des groupes époxy sur un substrat, **caractérisé en ce qu'**il comprend l'étape consistant à soumettre ledit substrat à une décharge pulsée de plasma en présence d'un composé organique de formule (I) ou (IA)

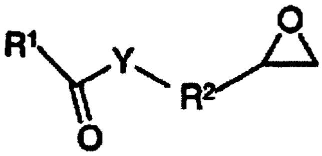

(I)

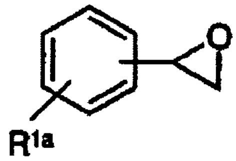

(IA)

où $R^1$ ou $R^{1a}$ est un groupe hydrocarbyle ou un groupe hétérocyclique facultativement substitués ; $R^2$ est une chaîne alkylène linéaire ou ramifiée facultativement substituée ; et Y est un oxygène ou une liaison et dans lequel la puissance moyenne de la décharge pulsée de plasma est inférieure à 0,05 W/cm$^3$.

2. Procédé selon la revendication 1, dans lequel le composé de formule (I) est un composé de formule (II)

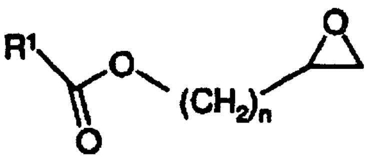

(II)

où $R^1$ est tel que défini dans la revendication 1 et n est un entier de 1 à 20.

3. Procédé selon la revendication 2, dans lequel, dans le composé de formule (II), n vaut 1 à 3.

4. Procédé selon la revendication 3, dans lequel le composé de formule (II) est un composé de formule (III)

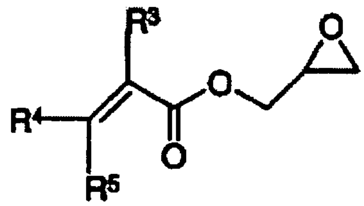

(III)

où $R^3$, $R^4$ et $R^5$ sont indépendamment choisis parmi un hydrogène et un alkyle en $C_1$ à $C_6$.

**5.** Procédé selon l'une quelconque des revendications 1 à 4, comprenant en outre l'étape consistant à dérivatiser de manière appropriée les groupes époxy avec un groupe nucléophile.

**6.** Procédé selon la revendication 5, dans lequel ladite étape de dérivatisation comprend la réaction avec un acide carboxylique ou une amine.

**7.** Procédé selon la revendication 6, dans lequel une solution dudit acide carboxylique ou de ladite amine est mise en contact avec la surface revêtue du substrat dans des conditions dans lesquelles la fonctionnalité acide ou amine réagit avec les groupes époxy.

**8.** Procédé pour faire adhérer deux surfaces l'une sur l'autre **caractérisé en ce qu'**il comprend les étapes consistant à appliquer un revêtement réactif contenant des groupes époxy sur au moins une desdites surfaces par le procédé selon l'une quelconque des revendications 1 à 4 et à mettre en contact ladite au moins une surface avec l'autre surface dans des conditions dans lesquelles les groupes époxy réactifs du revêtement réagissent afin de fixer les surfaces l'une sur l'autre.

**9.** Procédé selon la revendication 8, comprenant les étapes consistant à appliquer le revêtement réactif sur les deux surfaces, introduire un agent de couplage entre lesdites surfaces et permettre la réaction de dudit agent de couplage avec les groupes réactifs sur chaque surface.

**10.** Procédé selon la revendication 9, dans lequel l'agent de couplage est une diamine.

**11.** Procédé selon la revendication 8, dans lequel ladite autre surface comprend des groupes nucléophiles capables de réagir avec lesdits groupes époxy réactifs afin de réaliser l'adhérence.

**12.** Procédé selon la revendication 11, dans lequel lesdits groupes nucléophiles sont choisis parmi des groupes aminés et acides carboxyliques.

Scheme 1.

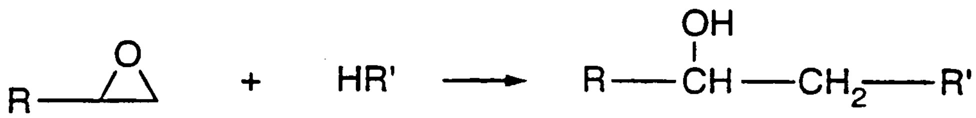

Scheme 3.

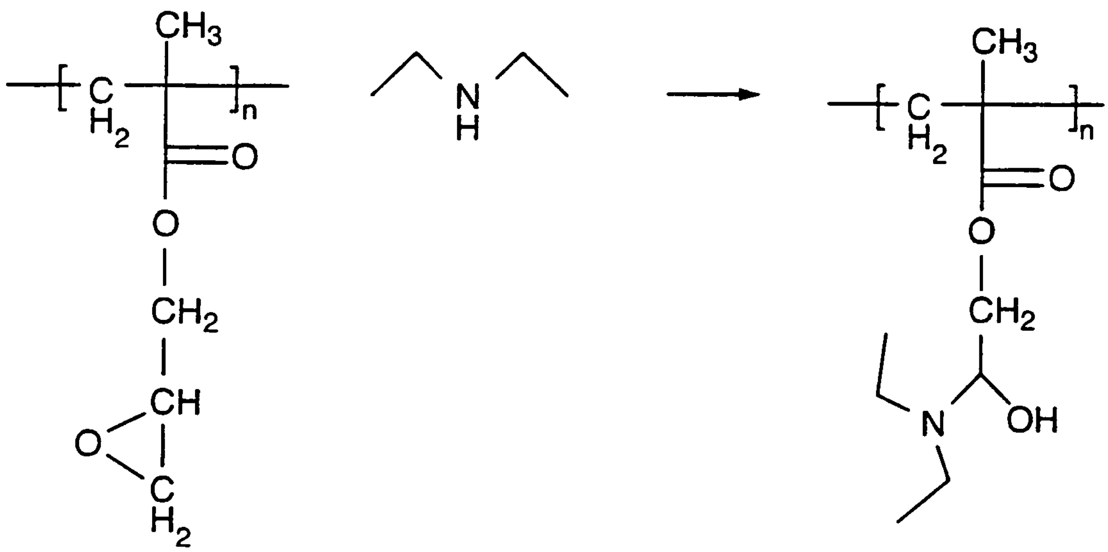

# Scheme 2.

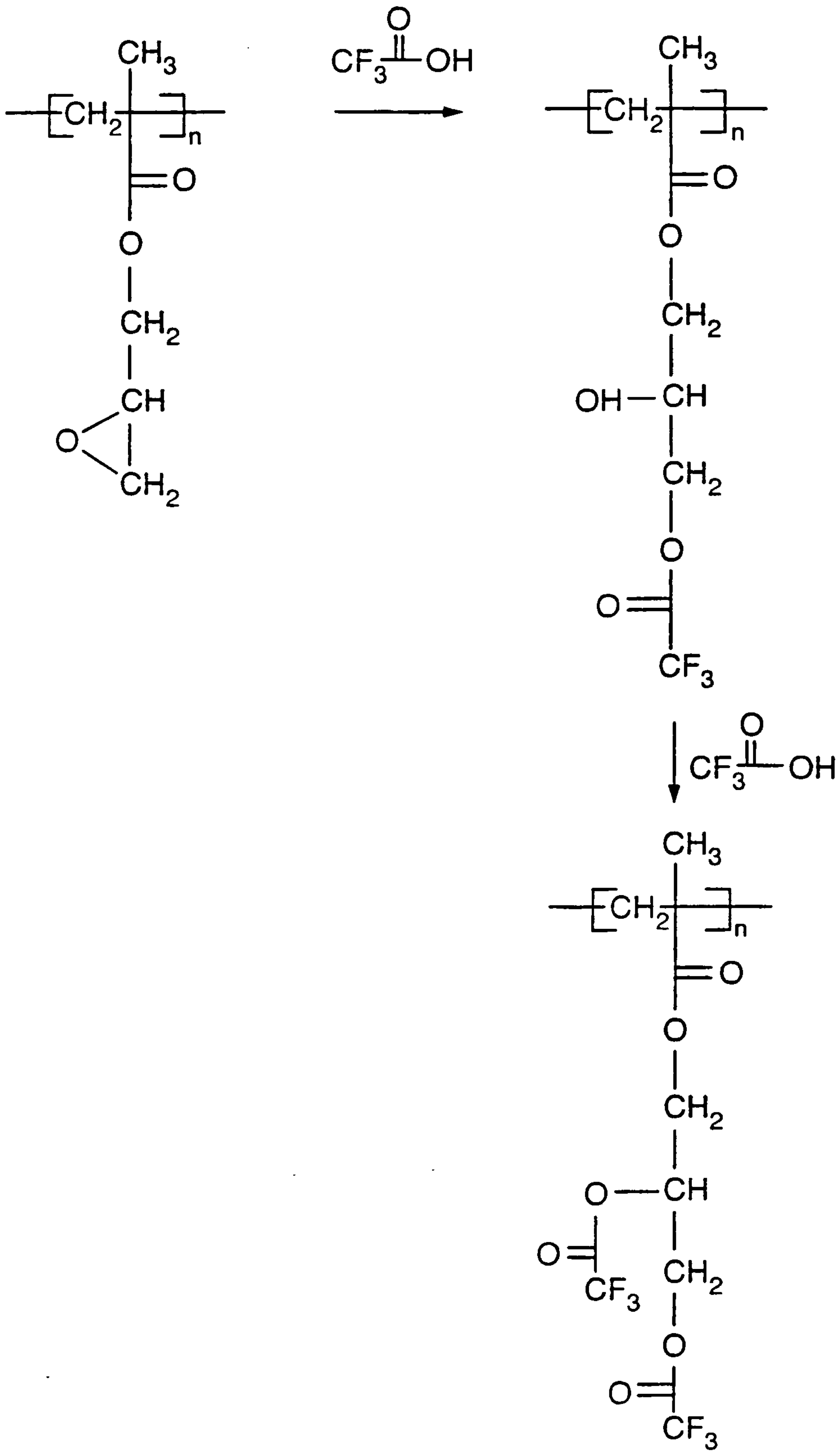

Fig.1.

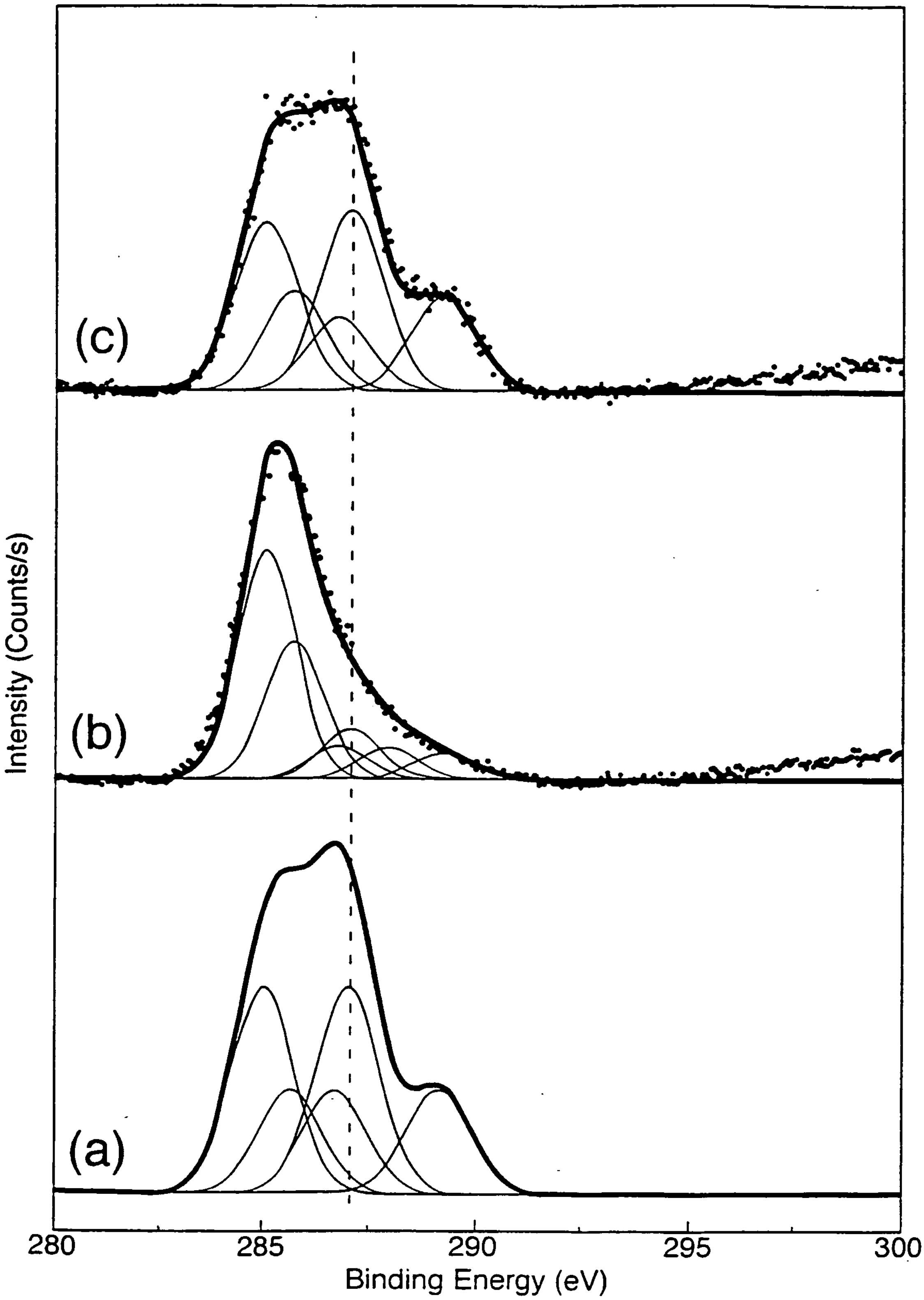

Fig.2.

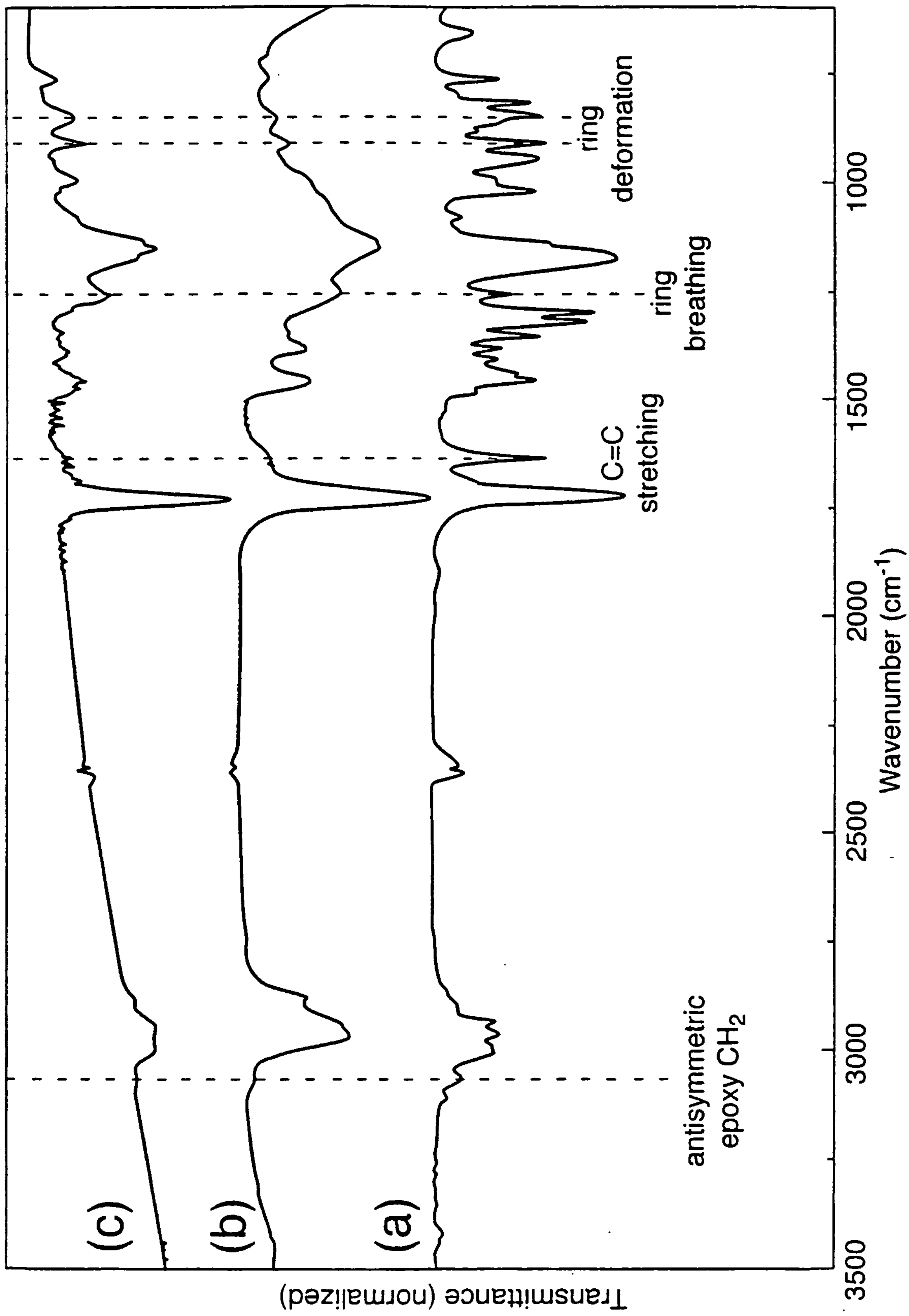
(a)
(b)
(c)
Transmittance (normalized)
Wavenumber (cm-1)
3500
3000
2500
2000
1500
1000
antisymmetric epoxy CH2
C=C stretching
ring breathing
ring deformation

Fig.3.

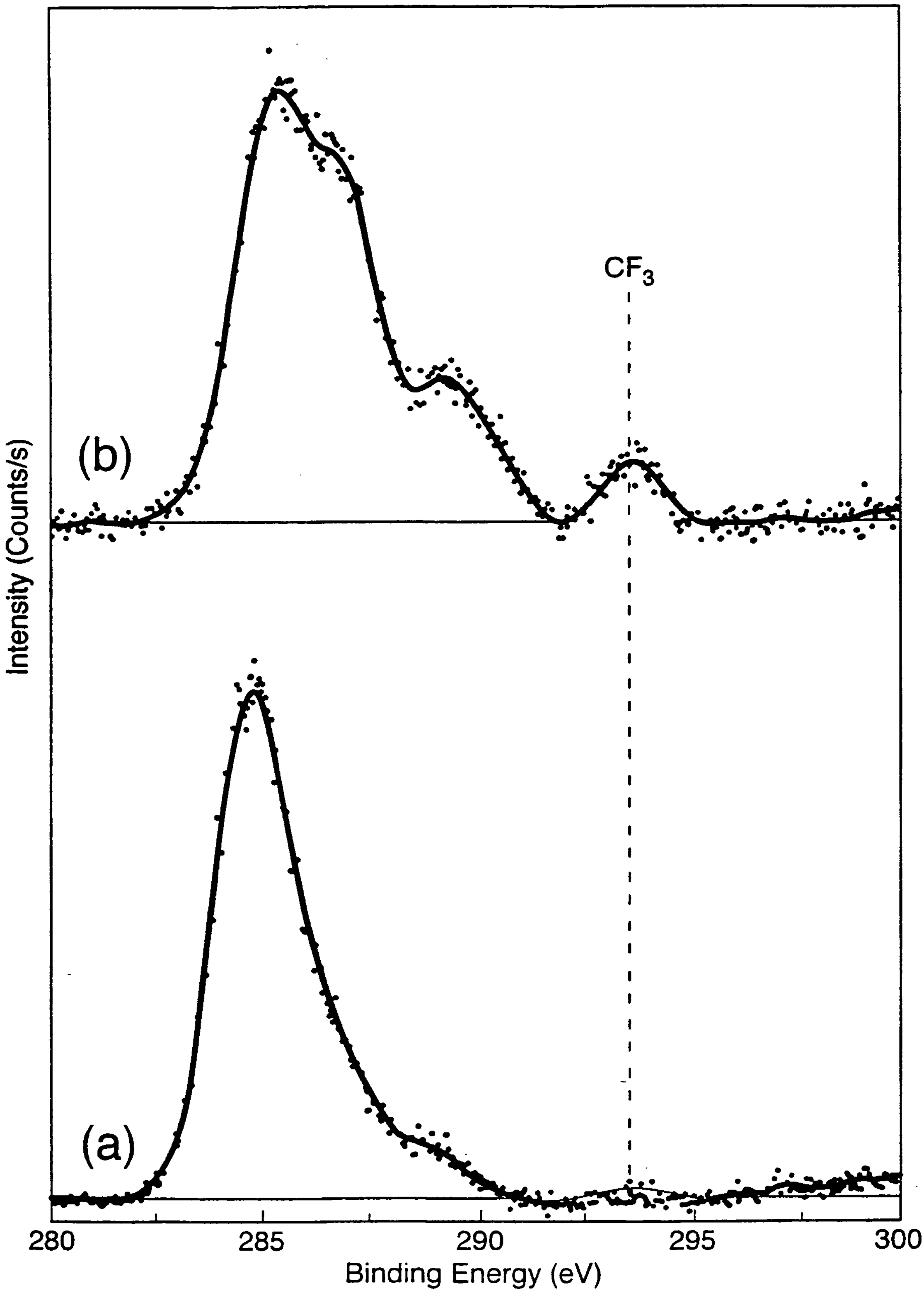
CF3
(b)
(a)
Intensity (Counts/s)
280
285
290
295
300
Binding Energy (eV)

Fig.4.

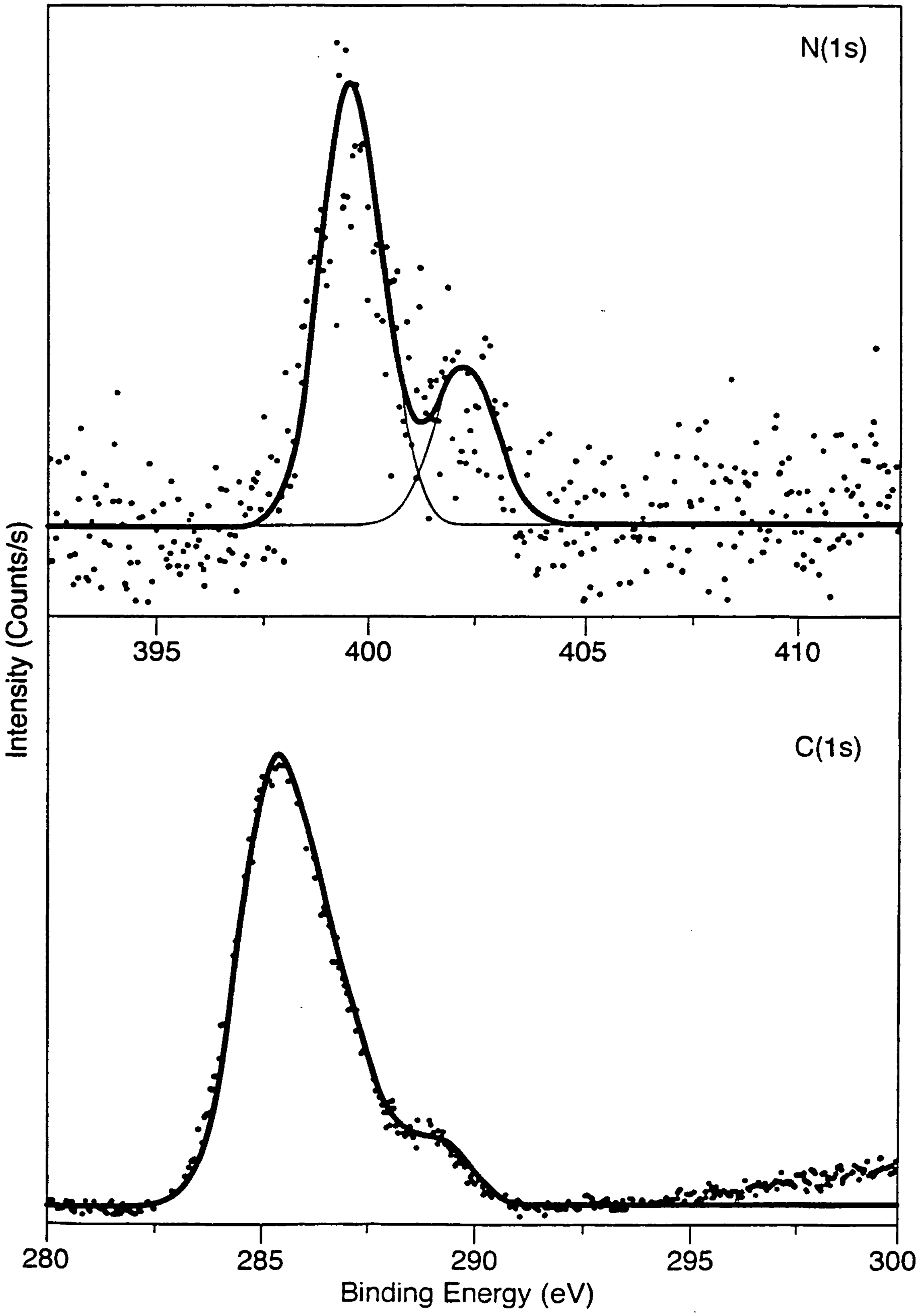
N(1s)
395
400
405
410
Intensity (Counts/s)
C(1s)
280
285
290
295
300
Binding Energy (eV)

Fig.5.

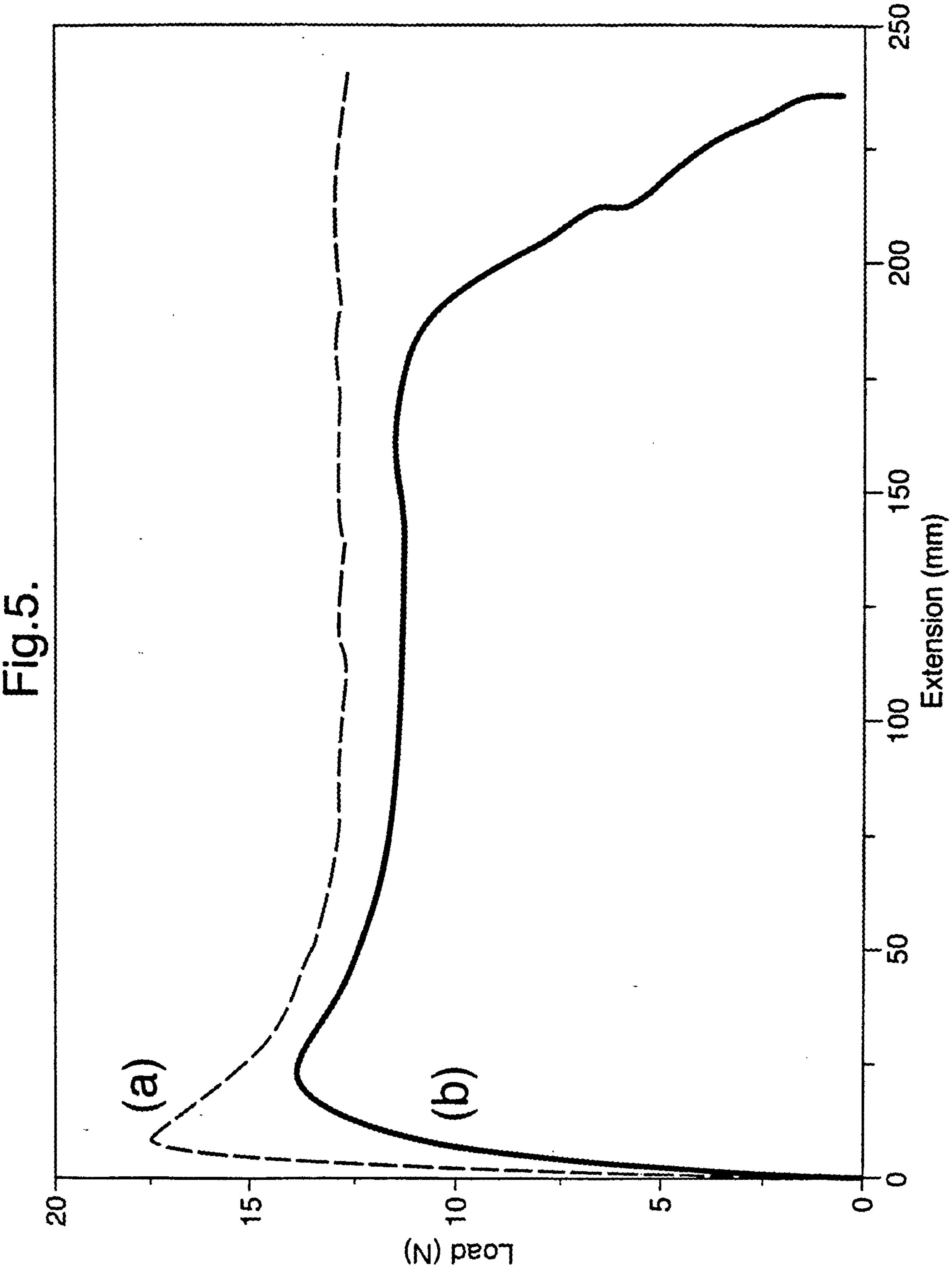

Fig.6.

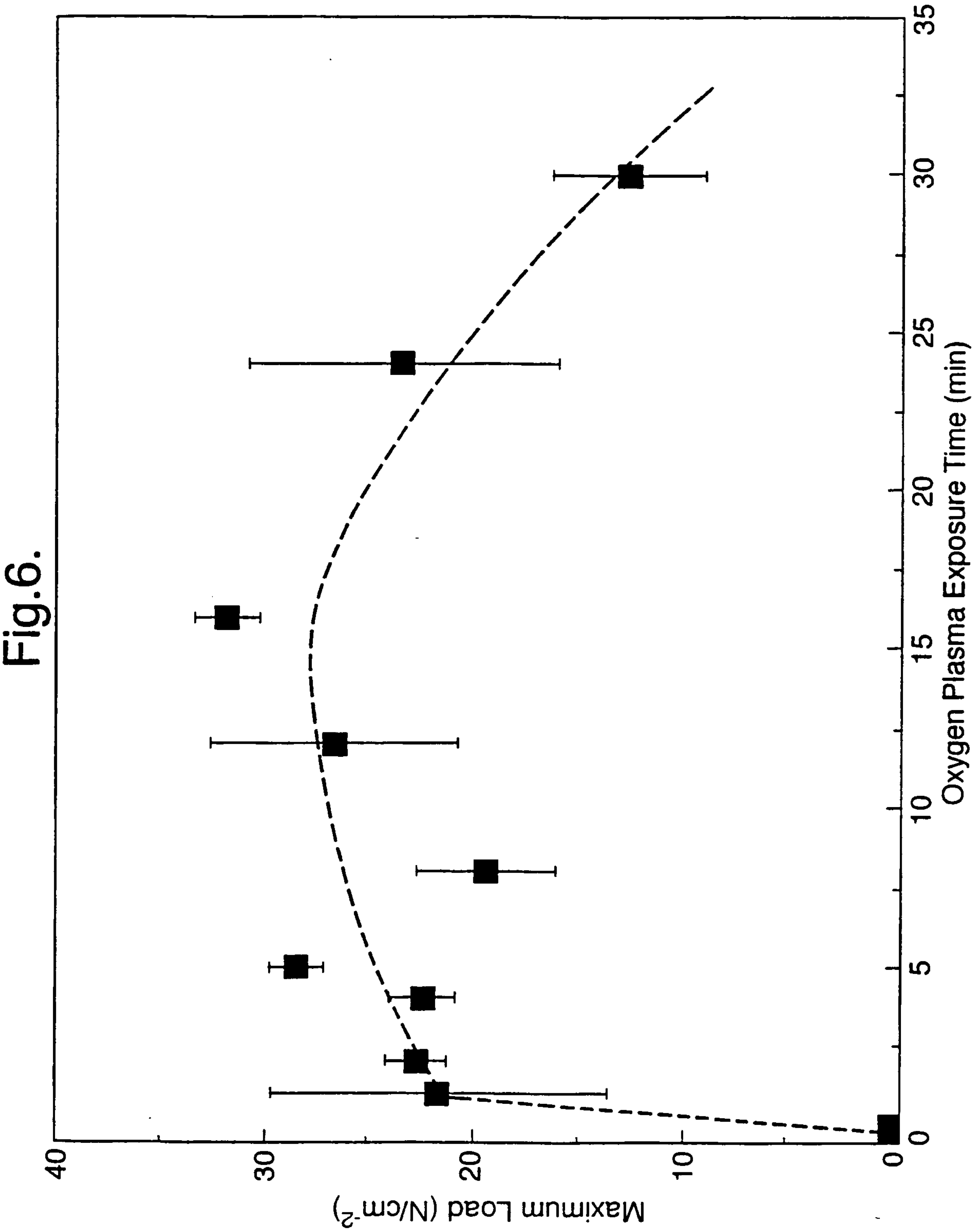
Maximum Load (N/cm$^{-2}$)
40
30
20
10
0
Oxygen Plasma Exposure Time (min)
0
5
10
15
20
25
30
35

Fig.7.

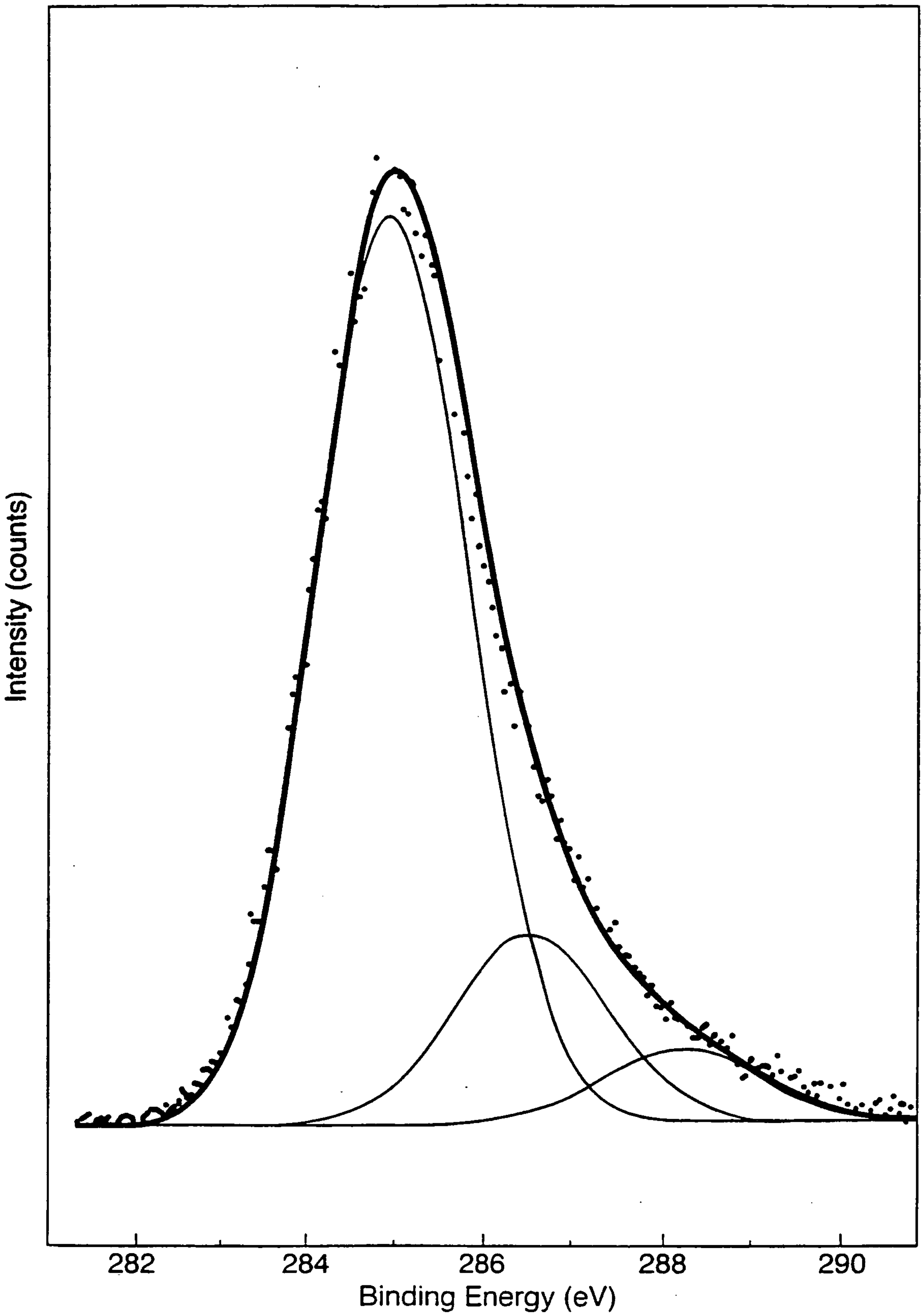

Fig.8.

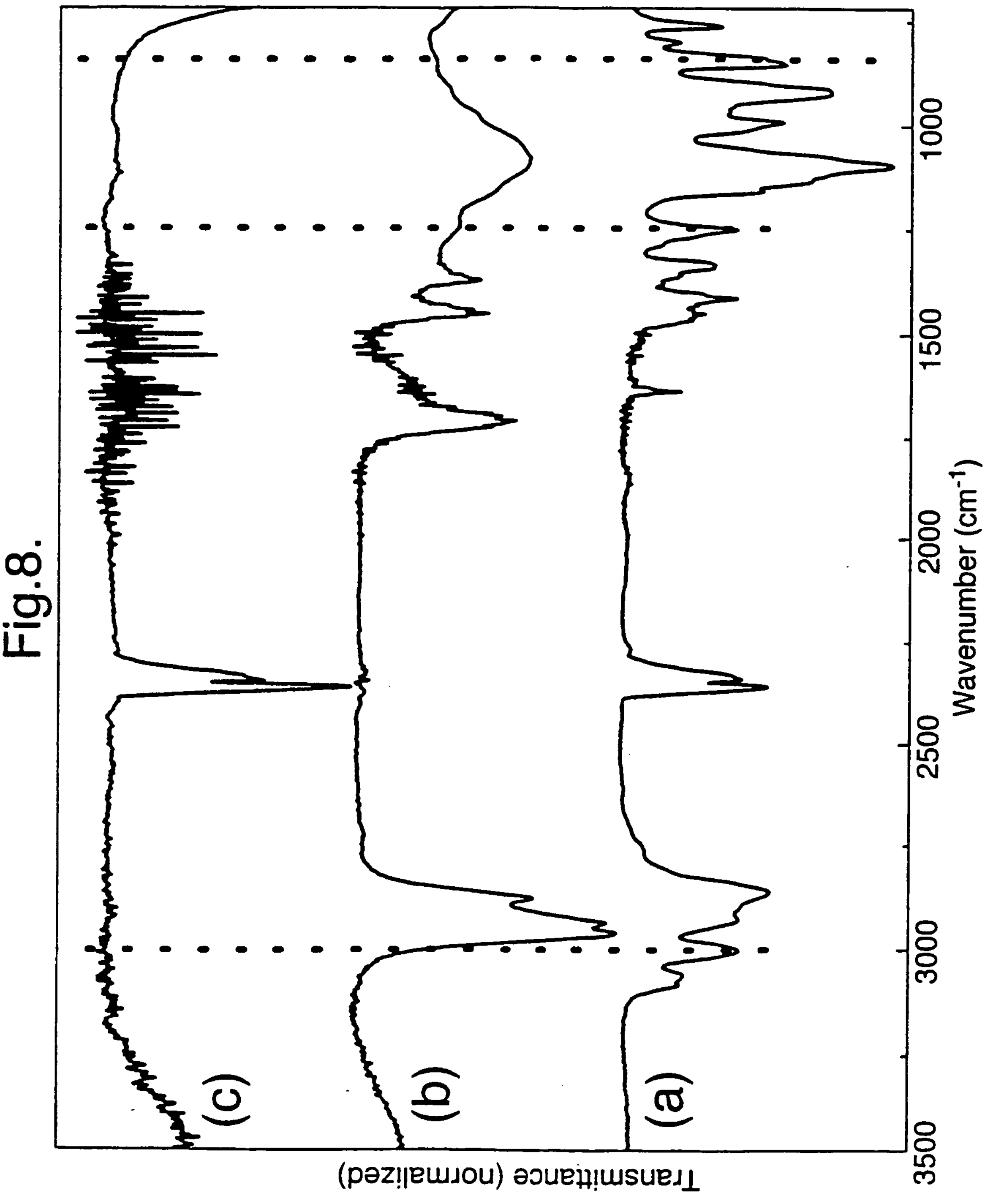
(a)
(b)
(c)
Transmittance (normalized)
Wavenumber (cm$^{-1}$)
3500
3000
2500
2000
1500
1000

Fig.9.

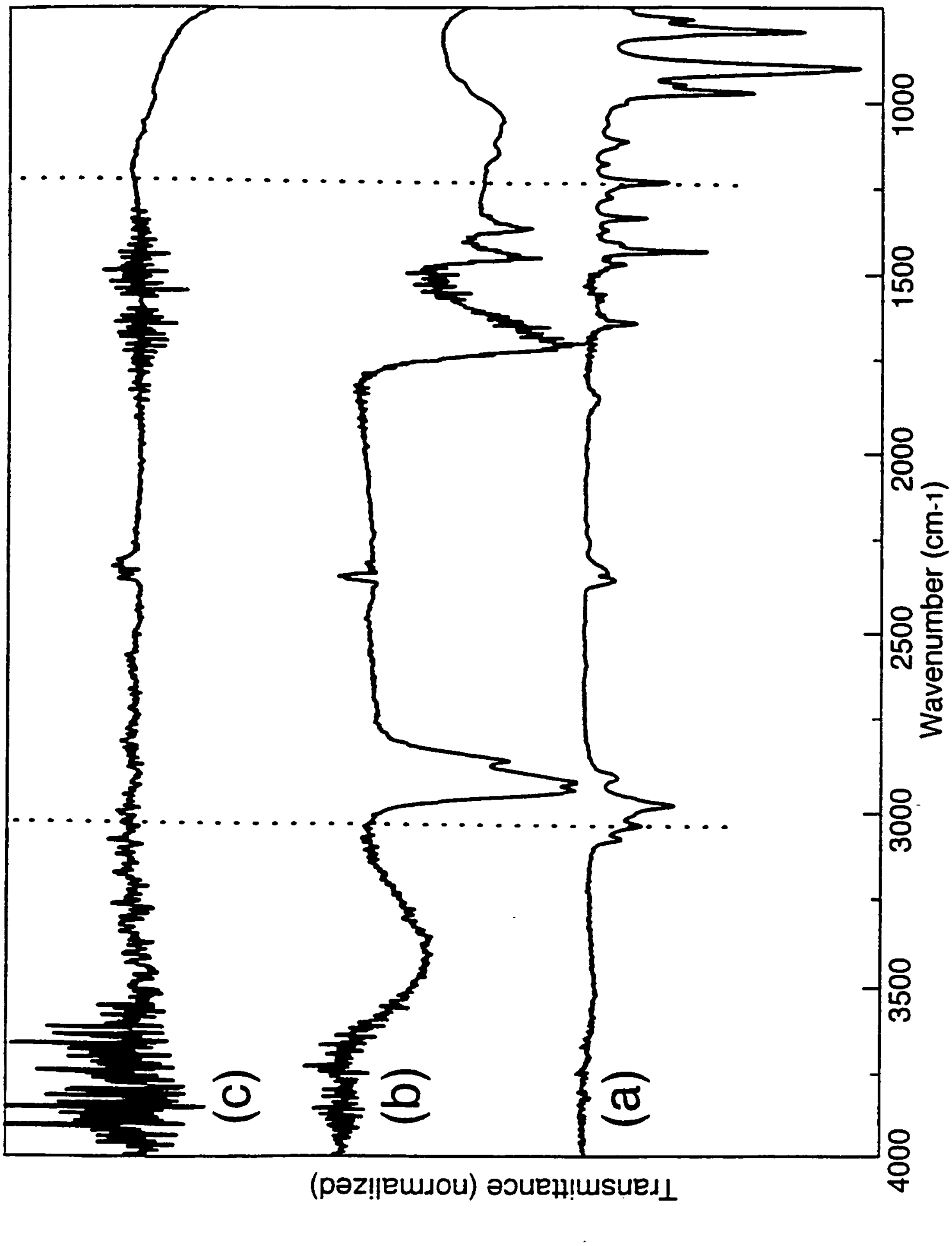

(a)
(b)
(c)
Transmittance (normalized)
4000
3500
3000
2500
2000
1500
1000
Wavenumber (cm-1)